# EUROPÄISCHE PATENTSCHRIFT

(11) **EP 4 381 219 B1**
(45) Veröffentlichungstag und Bekanntmachung des Hinweises auf die Patenterteilung: **10.09.2025**
(21) Anmeldenummer: 22744111.0
(22) Anmeldetag: 11.07.2022
(51) Int. Cl.: F16M 1/00, F16M 7/00, F16M 9/00

(54) **VERFAHREN ZUM HERSTELLEN EINER ANLAGE UND ANLAGE**
METHOD FOR PRODUCING A PLANT, AND PLANT
PROCÉDÉ DE PRODUCTION D'INSTALLATION ET INSTALLATION

(30) Priorität: 06.08.2021 US 202163230196 P; 30.09.2021 DE 102021004916
(43) Veröffentlichungstag der Anmeldung: 12.06.2024
(73) Patentinhaber: SEW-EURODRIVE GmbH & Co. KG, 76646 Bruchsal (DE)
(72) Erfinder: WILLIAMS, Logan, Woodruff, SC 29388 (US); BROWN, Shane, Roebuck, SC 29376 (US); RODGERS, Hans, Lake Sherwood, MO 63357 (US)
(86) Internationale Anmeldenummer: PCT/EP2022/025320
(87) Internationale Veröffentlichungsnummer: WO 2023/011754

(56) Entgegenhaltungen:
- WO-A2-2010/075390
- KR-B1- 101 778 518

## Beschreibung

Die Erfindung betrifft ein Verfahren zum Herstellen einer Anlage und eine Anlage.

Es ist allgemein bekannt, dass eine Anlage einen Antrieb, aufweisend ein von einem Elektromotor angetriebenes Getriebe, für Maschinen oder Vorrichtungen aufweist.

**Aus der** WO 2010/075390 A2 **ist als nächstliegender Stand der Technik eine Gasturbine bekannt.**

Der Erfindung liegt daher die Aufgabe zugrunde, ein Verfahren zum Erstellen einer Anlage weiterzubilden, wobei eine einfache und schnelle Fertigstellung und Inbetriebnahme der Anlage erreicht werden soll.

Erfindungsgemäß wird die Aufgabe bei der nach den in Anspruch 1 angegebenen Merkmalen gelöst.

Wichtige Merkmale der Erfindung bei dem Verfahren zum Herstellen einer Anlage sind, dass die Anlage eine Einrichtung, insbesondere Temperierungseinrichtung, aufweist,
wobei die Einrichtung eine drehbar gelagerte Welle aufweist,
wobei die Anlage eine Basis und ein einen Tragrahmen aufweisendes Getriebe aufweist,
wobei in einem ersten Verfahrensschritt eine Basis in der Anlage, insbesondere auf dem Boden der Anlage, montiert wird und auf die Basis zueinander parallel ausgerichtete Schienen aufgelegt und an der Basis befestigt werden,
in einem zweiten Verfahrensschritt das Getriebe mit seinem Tragrahmen auf die Schienen aufgesetzt wird und danach in Schienenrichtung verschoben wird,
in einem dritten Verfahrensschritt ein Schraubteil in eine durch den Tragrahmen durchgehende, insbesondere parallel zur Normalenrichtung der durch die Schienen definierten Ebene ausgerichtete, Gewindebohrung eingeschraubt wird, welches über zumindest ein Fußteil an einer Tragschiene abgestützt wird, und somit das Getriebe von den Schienen zunehmend beabstandet wird, insbesondere angehoben wird,
in einem vierten Verfahrensschritt die Schienen entfernt werden und das Schraubteil herausgeschraubt wird,
insbesondere und danach das Getriebe mit der Basis verbunden wird sowie ein Elektromotor auf der Basis angeordnet wird, dessen Rotorwelle mit der eintreibenden Welle des Getriebes drehfest verbunden wird, insbesondere über eine zwischengeordnete Kupplung oder über einen zwischengeordneten Adapter, und die abtreibende Welle des Getriebes direkt oder über ein zwischen geordnete weitere Kupplung mit der Welle der Einrichtung verbunden wird.

Von Vorteil ist dabei, dass die Erstellung der Anlage in sehr kurzer Zeit ausführbar ist, da keine besonders aufwendigen Mittel verwendet werden müssen. Denn das Getriebe ist ohne Verwendung eines Krans oder einer sonstigen Hubanlage zur Arbeitsposition bringbar, wobei oberhalb der Arbeitsposition kein oder kein wesentlicher Bauraum zur Verfügung steht, weil die anzutreibende Einrichtung den Bauraum insbesondere in vertikaler Richtung über dem Getriebe beschränkt. Zwar ist mit einem Kran oder einer Hubanlage das Getriebe nahe an die Einrichtung herantransportierbar, jedoch muss dann das Getriebe auf den Schienen abgesetzt und auf den Schienen dann verschoben werden, um die Arbeitsposition zu erreichen.

Nach Erreichen der Arbeitsposition wird die Welle der Einrichtung mit der abtreibenden Welle des Getriebes drehfest verbunden. Die Schienen sind nur ein zeitweise zusätzlich verwendetes Mittel, um das Getriebe unter Gleitreibung auf die Arbeitsposition zu verschieben, wobei nach dem Verschieben Schraubelemente eingeschraubt werden, um das Getriebe von den Schienen abzuheben und nach Entfernen der Schienen auch die Schraubelemente herauszuschrauben und/oder zu entfernen.

Weiterer Vorteil ist, dass auch bei einem Austausch des Getriebes in umgekehrter Reihenfolge vorgegangen werden kann, also zunächst die Schraubelemente eingeschraubt werden, dann das Getriebe angehoben wird und die Schienen unter das Getriebe zwischen Getriebe und Basis geschoben werden. Daraufhin wird das Getriebe auf die Schienen abgesenkt und herausgezogen. Somit ist ein Austausch des Getriebes ermöglicht, auch wenn die Einrichtung starke Wärmestrahlung zur Arbeitsposition hin abstrahlt. Denn das Einlegen von Schienen und das Herausziehen ist aus großer Entfernung ermöglicht. Somit wird die Produktion im laufenden Betrieb nur kurzzeitig unterbrochen, wenn das Getriebe auszutauschen sein sollte.

Bei einer vorteilhaften Ausgestaltung ist mit der Welle mindestens eine Scheibe drehfest verbunden, auf welcher Objekte, insbesondere Produkte, anordenbar sind,
insbesondere wobei die Anlage Heizelemente oder Temperierungselemente aufweist. Von Vorteil ist dabei, dass Backwaren auf der Scheibe drehbar angeordnet und somit von den Heizelementen möglichst gleichmäßig erhitzt werden, da die Drehung der Welle die effektiv wirksame Temperatur der Oberflächenpunkte vergleichmäßigt, insbesondere möglichst gleichmäßig verteilt.

Bei einer vorteilhaften Ausgestaltung besteht die Basis aus zueinander parallel ausgerichteten Tragschienen und die beiden Tragschienen verbindenden Querstreben. Von Vorteil ist dabei, dass eine möglichst steife Grundlagenkonstruktion zur Aufnahme des Elektromotors und des Getriebes bereitstellbar ist.

Bei einer vorteilhaften Ausgestaltung ist die Schienenrichtung senkrecht zu vertikalen Richtung ausgerichtet. Von Vorteil ist dabei, dass die Schienen horizontal ausgerichtet sind.

Bei einer vorteilhaften Ausgestaltung ist die senkrechte Projektion der Welle in die durch die beiden Schienen definierte Ebene von der senkrechten Projektion des Getriebes in die Ebene umfasst,
insbesondere
- wobei die senkrechte Projektion der Welle in die durch die beiden Schienen definierte Ebene von der senkrechten Projektion der abtreibenden Welle in die Ebene umfasst ist oder
- wobei die senkrechte Projektion der Welle in die durch die beiden Schienen definierte Ebene die senkrechte Projektion der abtreibenden Welle in die Ebene umfasst.

Von Vorteil ist dabei, dass der freie Bauraum oberhalb des Getriebes eingeschränkt ist und somit der Transport mittels einer Hubanlage nur eingeschränkt ermöglicht ist.

Bei einer vorteilhaften Ausgestaltung ist die Gewindebohrung nicht im Tragrahmen angeordnet, sondern in einer mit dem Tragrahmen fest verbundenen Komponente. Von Vorteil ist dabei, dass die Komponente weiter hervorragen kann und somit die Gewindebohrung einfach einbringbar ist sowie genügend Bauraum zum Betätigen des Schraubteils vorhanden ist.

Bei einer vorteilhaften Ausgestaltung werden an der Unterseite des Tragrahmens vor dem zweiten Verfahrensschritt Begrenzungselemente angebracht, insbesondere welche den Bewegungsfreiheitsgrad des Getriebes in Querrichtung zur Schienenrichtung begrenzen und/oder welche an den Schienen anliegen,
wobei die Begrenzungselemente im dritten Verfahrensschritt entfernt werden. Von Vorteil ist dabei, dass die Bewegung des Getriebes in Querrichtung begrenzt und somit gesichert ist, dass das Getriebe nur in Schienenrichtung bewegt wird.

Wichtige Merkmale bei der Anlage, insbesondere zur Durchführung eines vorgenannten Verfahrens sind, dass die Anlage eine Einrichtung, insbesondere Temperierungseinrichtung, aufweist,
wobei die Einrichtung eine drehbar gelagerte Welle aufweist,
wobei die Anlage eine Basis und ein einen Tragrahmen aufweisendes Getriebe aufweist,
wobei die Anlage Schienen aufweist, die auf der Basis aufgelegt und montiert sind,
wobei der Tragrahmen auf den Schienen aufliegt und verschiebbar ist,
wobei im Tragrahmen durchgehende Gewindebohrungen angeordnet sind, in welche Schraubteile einschraubbar sind, die indirekt oder direkt an den Tragschienen abstützbar sind, insbesondere zum Anheben des Getriebes.

Von Vorteil ist dabei, dass das Getriebe in einfacher Weise anhebbar oder absenkbar ist, so dass Schienen unter das Getriebe schiebbar sind beziehungsweise unter dem Getriebe herausziehbar sind.

**Erfindungsgemäß** ist der Tragrahmen U-förmig oder ringförmig ausgeführt. Von Vorteil ist dabei, dass der Tragrahmen im Vergleich zu den Seitenwänden und dem Bodenteil des Getriebes verdickt ausgeführt ist.

**Erfindungsgemäß** umfasst die senkrechte Projektion der Einrichtung auf die durch die Schienen definierte Ebene, insbesondere Horizontalebene, die senkrechte Projektion der abtreibenden Welle des Getriebes in diese Ebene oder die senkrechte Projektion des Getriebes in diese Ebene oder überlappt mit ihr. Von Vorteil ist dabei, dass das Getriebe mittels der Schienen ohne Hubanlage zur Arbeitsposition hin transportierbar ist. Insbesondere ist hier unter Arbeitsposition die in Schienenrichtung gesehene Position gemeint, insbesondere also unabhängig von der vertikalen Höhe, da mittels Betätigung der Schraubteile die Höhe des Getriebes, also der vertikale Abstand des Getriebes von den Tragschienen, einstellbar ist und insbesondere bei entfernten Schienen und Herausschrauben der Schraubteile auf Null bringbar ist oder auf ein Minimum, das der Dicke des zwischen Schraubteils und der Tragschiene angeordneten Fußelements entpsricht.

**Erfindungsgemäß** ist auf der Basis ein Elektromotor befestigt, dessen Rotorwelle mit der eintreibenden Welle des Getriebes drehfest verbunden ist, insbesondere über eine zwischen die eintreibende Welle und die Rotorwelle zwischengeordnete Kupplung. Von Vorteil ist dabei, dass die Basis nicht nur als Stütze und Auflage für die Schienen, sondern auch für den Elektromotor fungiert. Das Getriebe wird in demjenigen Bereich auf die Schienen aufgesetzt, in welchem der Elektromotor angeordnet wird. Somit wird der Bereich zunächst zum Aufsetzen und Verschieben des Getriebes und dann zum Aufsetzen und Montieren des Elektromotors verwendet.

**Erfindungsgemäß** ist das Schraubteil ein Gewindestift, der über ein Fußelement direkt oder indirekt an der Tragschiene abgestützt ist. Von Vorteil ist dabei, dass die vom Schraubteil eingeleitete Gewichtskraft über das Fußelement aufgespreizt wird und somit der Druck und/oder die Hertzsche Pressung verringert wird.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist eine erfindungsgemäße Anlage zur Herstellung von Produkten schematisch dargestellt, wobei ein Getriebe 1 auf Schienen 2 zur Arbeitsposition gebracht wird.
In der Figur 2 ist das Getriebe 1 mit den Schienen 2 in Schrägansicht näher und konkreter dargestellt.
In der Figur 3 ist eine zugehörige Seitenansicht dargestellt.
In der Figur 4 ist ein Ausschnitt der Figur 3 vergrößert dargestellt.

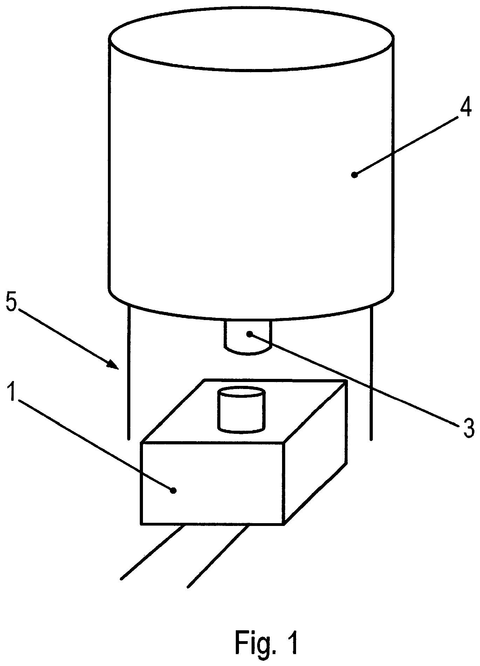

Wie in Figur 1 gezeigt, wird ein Getriebe 1 auf Schienen 2 aufgesetzt und zu einer Arbeitsposition hinbewegt, insbesondere gezogen und/oder geschoben. In Figur 1 hat das Getriebe 1 die Arbeitsposition noch nicht erreicht.

Die Arbeitsposition befindet sich unterhalb einer Temperierungseinrichtung 4. Diese ist turmartig ausgebildet und weist eine vertikal ausgerichtete Welle 3 auf, mit welcher Scheiben drehfest verbunden sind, auf denen die Produkte, beispielsweise Backwaren, angeordnet sind. Die Temperierungseinrichtung 4 weist insbesondere Heizelemente auf zur Erhitzung der Produkte.

Im Betrieb wird die Welle 3 angetrieben, so dass eine gleichmäßige Erhitzung der Produkte erreichbar ist.

Das Antrieben der Welle 3 erfolgt durch das Getriebe 1, welches in seine Arbeitsposition gebracht ist und dessen abtreibende Welle mit der Welle 3 drehfest verbunden wurde.

Das Getriebe wird von einem in der Figur 1 nicht gezeigten Elektromotor angetrieben, dessen Rotorwelle drehfest mit der eintreibenden Welle des Getriebes 1 verbunden ist.

Das Bewegen des Getriebes 1 auf Schienen 2 ist deshalb vorteilhaft, weil oberhalb des Getriebes ein freier Raumbereich für einen Kran oder Ähnliches zur Verfügung steht.

Die Schienen 2 sind allerdings nur zum Transport vorgesehen und werden vor Beginn des Betriebs entfernt. Beim Betrieb ist das Getriebe 1 Basis verbunden.

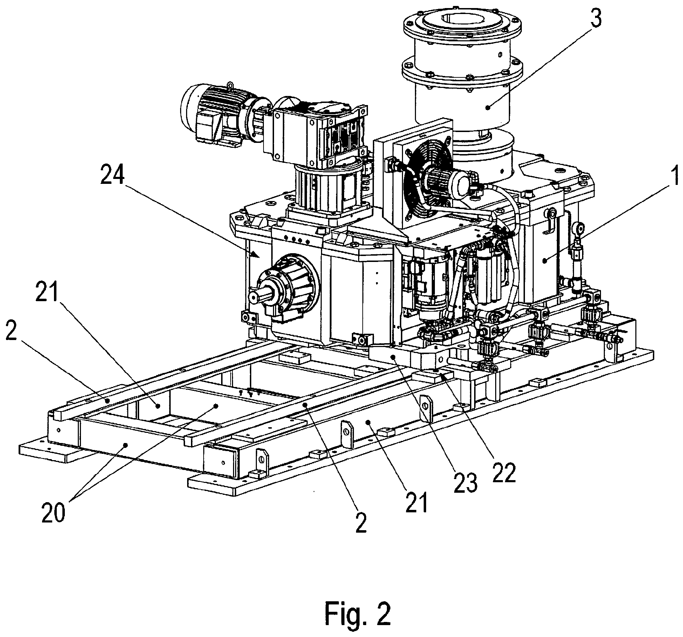

Wie in Figur 2 gezeigt, ist die Basis als Leiterartige Struktur ausgeführt und besteht aus zwei parallel zueinander angeordneten Tragschienen 21, die mittels Querstreben 20 verbunden sind.

Insbesondere gleicht die Basis also einer horizontal liegenden Leiter.

Vor Inbetriebnahme wird also in einem ersten Verfahrensschritt die Basis derart auf dem Boden der Anlage angeordnet und auf der Basis die Schienen 2 montiert, dass das Getriebe 1 mit einem Kran auf die Schienen 2 aufsetzbar ist und danach entlang der Schienen 2 verschiebbar unter die Temperierungseinrichtung 4 zur Arbeitsposition hin.

In einem zweiten Verfahrensschritt wird dann also das Getriebe 1 mit dem Kran auf die Schienen aufgesetzt und entlang der Schienen 2 zur Arbeitsposition bewegt.

Das Getriebe 1 weist selbst einen U-förmigen oder ringförmigen Tragrahmen 23 auf, wobei das U beziehungsweise der Ring in einer horizontalten Ebene liegt. Die Seitenwände 24 des Getriebes 1 erstrecken sich dann in vertikaler Richtung.

Das Getriebe 1 liegt mit seinem Tragrahmen 23 auf den Schienen 2 auf. Die Berührfläche des Tragrahmens 23 zu den Schienen 2 hin ist eben ausgeführt.

Beim Bewegen des Getriebes 1 auf den Schienen 2 tritt Gleitreibung auf. Die Bewegung des Getriebes 1 auf den Schienen 2 muss nicht geführt sein, da die Richtung durch die Richtung der Zugkraft steuerbar ist.

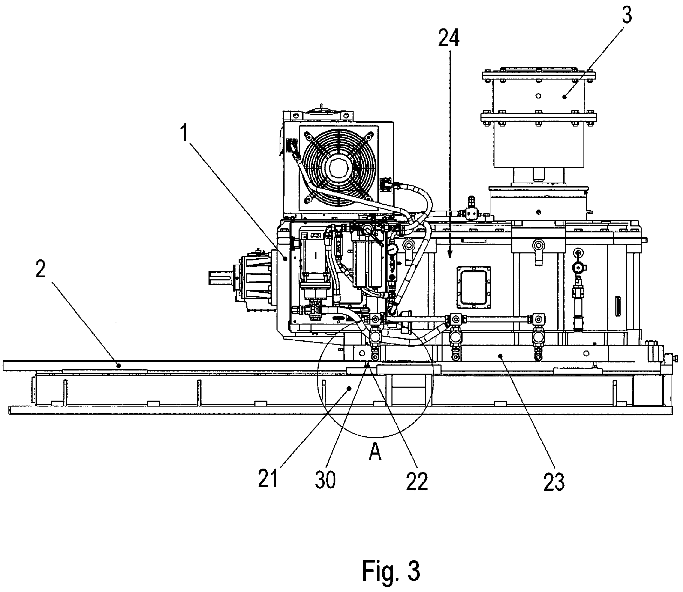

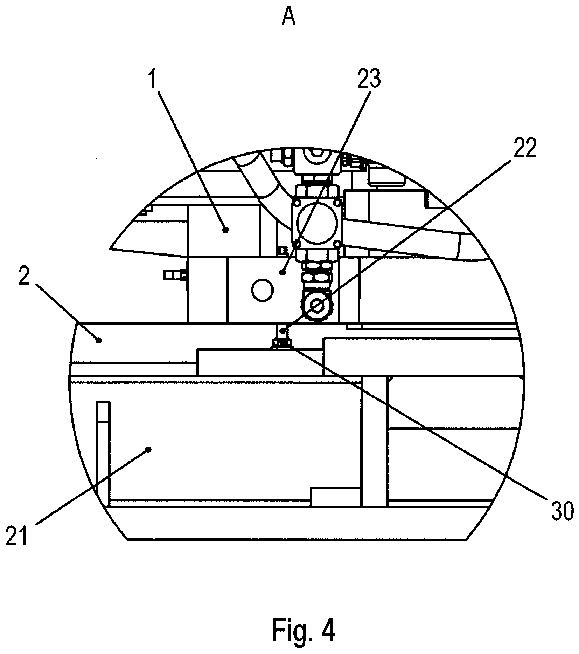

Nach dem zweiten Verfahrensschritt wird ein in Figur 3 und Figur 4 erkennbares Schraubteil 22, insbesondere Gewindestange oder Schraube, durch eine vertikal gerichtete, durch den Tragrahmen 23 durchgehende Gewindebohrung geschraubt, wobei der Endbereich des Schraubteils 22 in ein Fußelement 30, insbesondere Pad, hineinragt- Das Fußelement 30 liegt dabei auf einer Tragschiene 21 auf oder auf einem Zwischenteil, das auf der Tragschiene 21 aufliegt.

Dabei wird durch das Schrauben des Schraubteils 22 das Getriebe 1 angehoben, insbesondere während das Schraubteil 22 über zumindest das Fußteil 3ß an der Tragschienen 21 abgestützt ist.

In einem dritten Verfahrensschritt werden die Schienen 2 entfernt, insbesondere also abmontiert von der Basis.

In einem vierten Verfahrensschritt wird das Schraubteil 22 herausgeschraubt, so dass das Getriebe 1 mit seinem Tragrahmen direkt auf die Basis aufgesetzt wird.

Danach wird das Getriebe mit Schrauben an der Basis gesichert und befestigt sowie ein Elektromotor auf die Basis aufgesetzt und dessen Rotorwelle mit der eintreibenden Welle des Getriebes drehfest verbunden, insbesondere über einen zwischengeordneten Adapter und/oder über eine zwischengeordnete Kupplung.

Außerdem wird die Welle 3 der Temperierungseinrichtung 4 mit der abtreibenden Welle des Getriebes drehfest verbunden.

Wie in Figur 2 zusammen mit Figur 3 und Figur 4 deutlich sichtbar, sind die Schienen 2 auf der Basis, die aus Tragschienen 21 und den die Tragschienen verbindenden Querstreben 20 gebildet ist, aufgelegt. Insbesondere sind die Schienen mittels Schrauben an der Basis befestigt.

Der U-förmig ausgeführte Tragrahmen 23 des Getriebes 1 liegt auf den Schienen auf. Insbesondere ist dieser Tragrahmen 23 verdickt ausgeführt.

Der Tragrahmen 23 bildet den unteren Rand eines kastenförmigen Unterteils, wobei eine Bodenwand vom Tragrahmen 23 umrandet ist und Seitenwände 24 des Unterteils vertikal ausgerichtet sind. Ein Deckelteil ist auf das Unterteil aufgesetzt und weist eine Ausnehmung für die abtreibende Welle des Getriebes auf, die nach oben herausragt. Die eintreibende Welle ragt durch eine der Seitenwände 24 heraus. Die Drehachse der eintreibenden Welle ist horizontal ausgerichtet.

Bei weiteren erfindungsgemäßen Ausführungsbeispielen wird die Bewegung des Getriebes 1 auf den Schienen 2 geführt ausgeführt, indem an der Unterseite des Tragrahmens Begrenzungselemente zur Basis hin hervorragen, so dass die seitliche Bewegung des Getriebes 1, insbesondere also in Querrichtung zur Zugkraftrichtung, mittels der Begrenzungselemente begrenzt ist. Somit ist die Positionierung vereinfacht. Die Begrenzungselemente werden vor dem zweiten Verfahrensschritt angebracht und nach dem zweiten Verfahrensschritt entfernt.

Bei weiteren erfindungsgemäßen Ausführungsbeispielen wird statt der Temperierungseinrichtung 4 eine andere Einrichtung, insbesondere einer Maschine oder Anlage, verwendet. Dabei wird wiederum eine Welle der Einrichtung mit der abtreibenden Welle des Getriebes drehfest verbunden.

### Bezugszeichenliste

1 Getriebe
2 Schiene
3 Welle
4 Temperierungseinrichtung
5 Haltemittel
20 Querstreben
21 Tragschienen
22 Schraubteil
23 Tragrahmen, insbesondere U-förmiger Tragrahmen
24 Seitenwand
30 Fußelement, insbesondere Pad

## Patentansprüche

1. Verfahren zum Herstellen einer Anlage,
wobei die Anlage eine Temperierungseinrichtung (4) aufweist,
wobei die Einrichtung eine drehbar gelagerte Welle (3) aufweist,
wobei die Welle (3) vertikal ausgerichtet,
wobei mit der Welle (3) Scheiben drehfest verbunden sind, auf denen als Produkte, insbesondere Backwaren, angeordnet sind,
wobei die Temperierungseinrichtung (4) Heizelemente zur Erhitzung der Produkte aufweist,
wobei die Welle (3) angetrieben wird, so dass eine gleichmäßige Erhitzung der **Produkte erreicht wird,**
wobei die Anlage eine Basis und ein einen Tragrahmen (23) aufweisendes Getriebe (1) aufweist,
wobei in einem ersten Verfahrensschritt eine Basis in der Anlage, insbesondere auf dem Boden der Anlage, montiert wird und auf die Basis zueinander parallel ausgerichtete Schienen (2) aufgelegt und an der Basis befestigt werden,
in einem zweiten Verfahrensschritt das Getriebe (1) mit seinem Tragrahmen (23) auf die Schienen (2) aufgesetzt wird und danach in Schienenrichtung verschoben wird,
in einem dritten Verfahrensschritt
- ein Schraubteil (22) in eine durch den Tragrahmen (23) durchgehende, insbesondere parallel zur Normalenrichtung der durch die Schienen (2) definierten Ebene ausgerichtete, Gewindebohrung eingeschraubt wird, welches über zumindest ein Fußteil an einer Tragschiene abgestützt wird, und somit das Getriebe (1) von den Schienen (2) zunehmend beabstandet wird, insbesondere angehoben wird,
- oder Schraubteile in durch den Tragrahmen (23) durchgehende, insbesondere parallel zur Normalenrichtung der durch die Schienen (2) definierten Ebene ausgerichtete, Gewindebohrungen eingeschraubt werden, wobei die Schraubteile jeweils über zumindest ein Fußteil an einer Tragschiene abgestützt werden, und somit das Getriebe (1) von den Schienen (2) zunehmend beabstandet wird, insbesondere angehoben wird,
in einem vierten Verfahrensschritt die Schienen (2) entfernt werden und das Schraubteil (22) herausgeschraubt wird,
insbesondere und danach das Getriebe (1) mit der Basis verbunden wird sowie ein Elektromotor auf der Basis angeordnet wird, dessen Rotorwelle mit der eintreibenden Welle (3) des Getriebes (1) drehfest verbunden wird, insbesondere über eine zwischengeordnete Kupplung oder über einen zwischengeordneten Adapter, und die abtreibende Welle (3) des Getriebes (1) direkt oder über eine zwischengeordnete weitere Kupplung mit der Welle (3) der Einrichtung verbunden wird,
**wobei die senkrechte Projektion der Welle (3) in die durch die beiden Schienen (2) definierte Ebene von der senkrechten Projektion des Getriebes (1) in die Ebene umfasst ist,**
- **wobei die senkrechte Projektion der Welle (3) in die durch die beiden Schienen (2) definierte Ebene von der senkrechten Projektion der abtreibenden Welle (3) in die Ebene umfasst ist oder**
- **wobei die senkrechte Projektion der Welle (3) in die durch die beiden Schienen (2) definierte Ebene die senkrechte Projektion der abtreibenden Welle (3) in die Ebene umfasst.**

2. Verfahren nach Anspruch 1,
**dadurch gekennzeichnet, dass**
mit der Welle (3) mindestens eine Scheibe drehfest verbunden ist, auf welcher Objekte, insbesondere Produkte, anordenbar sind,
insbesondere wobei die Anlage Heizelemente oder Temperierungselemente aufweist.

3. Verfahren nach einem der vorangegangenen Ansprüche,
**dadurch gekennzeichnet, dass**
die Basis aus zueinander parallel ausgerichteten Tragschienen (21) und die beiden Tragschienen (21) verbindenden Querstreben (20) besteht.

4. Verfahren nach einem der vorangegangenen Ansprüche,
**dadurch gekennzeichnet, dass**
die Schienenrichtung senkrecht zu vertikalen Richtung ausgerichtet ist.

5. Verfahren nach einem der vorangegangenen Ansprüche,
**dadurch gekennzeichnet, dass**

6. Verfahren nach einem der vorangegangenen Ansprüche,
**dadurch gekennzeichnet, dass**
die Gewindebohrung nicht im Tragrahmen (23) angeordnet ist, sondern in einer mit dem Tragrahmen (23) fest verbundenen Komponente.

7. Verfahren nach einem der vorangegangenen Ansprüche,
**dadurch gekennzeichnet, dass**
an der Unterseite des Tragrahmens vor dem zweiten Verfahrensschritt Begrenzungselemente angebracht werden, insbesondere welche den Bewegungsfreiheitsgrad des Getriebes (1) in Querrichtung zur Schienenrichtung begrenzen und/oder welche an den Schienen (2) anliegen,
wobei die Begrenzungselemente im dritten Verfahrensschritt entfernt werden.

8. Anlage, insbesondere zur Durchführung eines Verfahrens nach einem der vorangegangenen Ansprüche,
wobei die Anlage eine Temperierungseinrichtung (4) aufweist,
wobei die Einrichtung eine drehbar gelagerte Welle (3) aufweist,
wobei die Welle (3) vertikal ausgerichtet,
wobei mit der Welle (3) Scheiben drehfest verbunden sind, auf denen als Produkte, insbesondere Backwaren, angeordnet sind,
wobei die Temperierungseinrichtung (4) Heizelemente zur Erhitzung der Produkte aufweist,
wobei die Welle (3) angetrieben wird, so dass eine gleichmäßige Erhitzung der Produkte erreicht wird,
wobei die Anlage eine Basis und ein einen Tragrahmen (23) aufweisendes Getriebe (1) aufweist,
**dadurch gekennzeichnet, dass**
die Anlage Schienen (2) aufweist, die auf der Basis aufgelegt und montiert sind,
wobei der Tragrahmen (23) auf den Schienen (2) aufliegt und verschiebbar ist,
wobei im Tragrahmen (23) eine oder mehrere durchgehende Gewindebohrungen angeordnet sind, in welche jeweils ein Schraubteil (22) einschraubbar sind, die indirekt oder direkt an den Tragschienen (21) abstützbar sind, insbesondere zum Anheben des Getriebes (1),
wobei die senkrechte Projektion der Welle (3) in die durch die beiden Schienen (2) definierte Ebene von der senkrechten Projektion des Getriebes (1) in die Ebene umfasst ist,
- wobei die senkrechte Projektion der Welle (3) in die durch die beiden Schienen (2) definierte Ebene von der senkrechten Projektion der abtreibenden Welle (3) in die Ebene umfasst ist oder
- wobei die senkrechte Projektion der Welle (3) in die durch die beiden Schienen (2) definierte Ebene die senkrechte Projektion der abtreibenden Welle (3) in die Ebene umfasst,
wobei der Tragrahmen (23) U-förmig oder ringförmig ausgeführt ist,
wobei die senkrechte Projektion der Einrichtung auf die durch die Schienen (2) definierte Ebene, nämlich Horizontalebene, die senkrechte Projektion der abtreibenden Welle (3) des Getriebes (1) in diese Ebene umfasst oder die senkrechte Projektion des Getriebes (1) in diese Ebene umfasst oder mit ihr überlappt,
wobei auf der Basis ein Elektromotor befestigt ist, dessen Rotorwelle mit der eintreibenden Welle (3) des Getriebes (1) drehfest verbunden ist über eine zwischen die eintreibende Welle (3) und die Rotorwelle zwischengeordnete Kupplung,
wobei das Schraubteil (22) ein Gewindestift ist, der über ein Fußelement (30) direkt oder indirekt an der Tragschiene abgestützt ist.

## Claims

1. A method for producing an installation,
wherein the installation has a temperature control device (4),
wherein the device has a rotatably mounted shaft (3),
wherein the shaft (3) [is] vertically oriented,
wherein discs are connected non-rotatably to the shaft (3), on which discs [as] products, in particular bakery goods, are arranged,
wherein the temperature control device (4) has heating elements for heating the products,
wherein the shaft (3) is driven, so that uniform heating of the products is achieved, wherein the installation has a base and a gear unit (1) which has a supporting frame (23),
wherein in a first method step a base is mounted in the installation, in particular on the bottom of the installation, and rails (2) which are oriented parallel to each other are laid on the base and fastened to the base,
in a second method step the gear unit (1) with its supporting frame (23) is placed on the rails (2) and thereafter is displaced in the rail direction,
in a third method step
- a screwing part (22) is screwed into a threaded bore which passes through the supporting frame (23) and in particular which is oriented parallel to the normal direction of the plane defined by the rails (2), which part is supported on a supporting rail by way of at least one foot part, and thus the gear unit (1) is increasingly spaced apart, in particular is raised, from the rails (2),
- or screwing parts are screwed into threaded bores which pass through the supporting frame (23) and in particular which are oriented parallel to the normal direction of the plane defined by the rails (2), with the screwing parts each being supported on a supporting rail by way of at least one foot part, and thus the gear unit (1) being increasingly spaced apart, in particular being raised, from the rails (2),
in a fourth method step the rails (2) are removed and the screwing part (22) is unscrewed,
in particular and thereafter the gear unit (1) is connected to the base and also an electric motor is arranged on the base, the rotor shaft of which is connected non-rotatably to the input shaft (3) of the gear unit (1), in particular by way of an interposed coupling or by way of an interposed adapter, and the output shaft (3) of the gear unit (1) is connected directly or by way of an interposed further coupling to the shaft (3) of the device,
with the perpendicular projection of the shaft (3) into the plane defined by the two rails (2) being encompassed by the perpendicular projection of the gear unit (1) into the plane,
- with the perpendicular projection of the shaft (3) into the plane defined by the two rails (2) being encompassed by the perpendicular projection of the output shaft (3) into the plane, or
- wherein the perpendicular projection of the shaft (3) into the plane defined by the two rails (2) encompasses the perpendicular projection of the output shaft (3) into the plane.

2. A method according to claim 1,
**characterised in that**
to the shaft (3) there is non-rotatably connected at least one disc, on which objects, in particular products, can be arranged,
in particular with the installation having heating elements or temperature control elements.

3. A method according to one of the preceding claims,
**characterised in that**
the base consists of supporting rails (21) oriented parallel to each other and transverse struts (20) connecting the two supporting rails (21).

4. A method according to one of the preceding claims,
**characterised in that**
the rail direction is oriented perpendicularly to the vertical direction.

5. A method according to one of the preceding claims,
**characterised in that**

6. A method according to one of the preceding claims,
**characterised in that**
the threaded bore is not arranged in the supporting frame (23) but in a component firmly connected to the supporting frame (23).

7. A method according to one of the preceding claims,
**characterised in that**
limiting elements, in particular which limit the degree of freedom of movement of the gear unit (1) in the transverse direction to the rail direction and/or which rest against the rails (2), are attached to the underside of the supporting frame prior to the second method step,
with the limiting elements being removed in the third method step.

8. An installation, in particular for carrying out a method according to one of the preceding claims,
wherein the installation has a temperature control device (4),
wherein the device has a rotatably mounted shaft (3),
wherein the shaft (3) [is] vertically oriented,
wherein discs are connected non-rotatably to the shaft (3), on which discs [as] products, in particular bakery goods, are arranged,
wherein the temperature control device (4) has heating elements for heating the products,
wherein the shaft (3) is driven, so that uniform heating of the products is achieved,
wherein the installation has a base and a gear unit (1) which has a supporting frame (23),
**characterised in that**
the installation has rails (2) which are laid and mounted on the base,
with the supporting frame (23) lying and being displaceable on the rails (2),
with one or more continuous threaded bores being arranged in the supporting frame (23), into which threaded bores can be screwed in each case a screwing part (22) which are able to be supported indirectly or directly on the supporting rails (21), in particular for raising the gear unit (1),
with the perpendicular projection of the shaft (3) into the plane defined by the two rails (2) being encompassed by the perpendicular projection of the gear unit (1) into the plane,
- with the perpendicular projection of the shaft (3) into the plane defined by the two rails (2) being encompassed by the perpendicular projection of the output shaft (3) into the plane, or
- wherein the perpendicular projection of the shaft (3) into the plane defined by the two rails (2) encompasses the perpendicular projection of the output shaft (3) into the plane,
with the supporting frame (23) being U-shaped or annular in form,
with the perpendicular projection of the device onto the plane, namely horizontal plane, defined by the rails (2) encompassing the perpendicular projection of the output shaft (3) of the gear unit (1) into this plane, or encompassing or overlapping with the perpendicular projection of the gear unit (1) into this plane,
with there being fastened on the base an electric motor, the rotor shaft of which is connected non-rotatably to the input shaft (3) of the gear unit (1) by way of a coupling interposed between the input shaft (3) and the rotor shaft,
with the screwing part (22) being a threaded pin which is supported directly or indirectly on the supporting rail by way of a foot element (30).

## Revendications

1. Procédé de production d'une installation,
laquelle installation est équipée d'un dispositif (4) de régulation thermique,
ledit dispositif comportant un arbre (3) monté à rotation,
lequel arbre (3) est orienté verticalement,
sachant que des disques, sur lesquels sont placés des produits se présentant notamment comme des articles de boulangerie, sont reliés audit arbre (3) avec verrouillage rotatif,
ledit dispositif (4) de régulation thermique étant muni d'éléments chauffants dévolus au chauffage des produits,
ledit arbre (3) étant entraîné de façon telle qu'un chauffage uniforme desdits produits soit obtenu,
l'installation comprenant une base et une transmission (1) pourvue d'un cadre de support (23), sachant que, lors d'une première étape opératoire, une base est montée dans l'installation, en particulier sur le sol de ladite installation et des rails (2), orientés parallèlement les uns aux autres, sont déposés sur la base et sont fixés à ladite base,
lors d'une deuxième étape opératoire, la transmission (1) est mise en place sur les rails (2) par son cadre de support (23), pour être ensuite déplacée dans la direction desdits rails,
lors d'une troisième étape opératoire,
- une pièce vissable (22), prenant appui sur un rail de support par l'intermédiaire d'au moins une partie d'embase, est vissée dans un perçage taraudé qui traverse ledit cadre de support (23) de part en part et est orienté, en particulier, parallèlement à la direction normale du plan défini par les rails (2), la transmission (1) se trouvant ainsi progressivement éloignée desdits rails (2), notamment soulevée,
- ou bien des pièces vissables sont vissées dans des perçages taraudés qui traversent le cadre de support (23) de part en part et sont orientés, en particulier, parallèlement à la direction normale du plan défini par les rails (2), lesquelles pièces vissables sont respectivement en appui sur un rail de support par l'intermédiaire d'au moins une partie d'embase, ladite transmission (1) se trouvant ainsi progressivement éloignée desdits rails (2), notamment soulevée,
lors d'une quatrième étape opératoire, lesdits rails (2) sont enlevés et ladite pièce vissable (22) est dévissée,
ensuite, la transmission (1) est notamment reliée à la base, de même qu'un moteur électrique est mis en place sur ladite base, l'arbre rotorique dudit moteur étant relié à l'arbre d'entrée (3) de la transmission (1), avec verrouillage rotatif, en particulier par l'entremise d'un accouplement interposé ou par l'entremise d'un adaptateur interposé, et l'arbre de sortie (3) de ladite transmission (1) étant relié à l'arbre (3) du dispositif, directement ou par l'entremise d'un accouplement interposé additionnel,
sachant que la projection verticale dudit arbre (3), dans le plan défini par les deux rails (2), est englobée par la projection verticale de la transmission (1) dans ledit plan,
- auquel cas la projection verticale dudit arbre (3), dans le plan défini par les deux rails (2), est englobée par la projection verticale de l'arbre de sortie (3) dans ledit plan, ou
- auquel cas la projection verticale dudit arbre (3), dans ledit plan défini par les deux rails (2), englobe la projection verticale de l'arbre de sortie (3) dans ledit plan.

2. Procédé selon la revendication 1,
**caractérisé par le fait**
**qu'**au moins un disque sur lequel peuvent être disposés des objets, en particulier des produits, est relié à l'arbre (3) avec verrouillage rotatif,
l'installation étant notamment dotée d'éléments chauffants ou d'éléments de régulation thermique.

3. Procédé selon l'une des revendications précédentes,
**caractérisé par le fait que**
la base est constituée par des rails de support (21), orientés parallèlement l'un à l'autre, et par des entretoises (20) reliant les deux rails de support (21).

4. Procédé selon l'une des revendications précédentes,
**caractérisé par le fait que**
la direction des rails est orientée perpendiculairement à la direction verticale.

5. Procédé selon l'une des revendications précédentes,
**caractérisé par le fait que**

6. Procédé selon l'une des revendications précédentes,
**caractérisé par le fait que**
le perçage taraudé est pratiqué non pas dans le cadre de support (23), mais dans un élément structurel relié rigidement audit cadre de support (23).

7. Procédé selon l'une des revendications précédentes,
**caractérisé par le fait que**
des éléments de limitation sont implantés à la face inférieure du cadre de support préalablement à la deuxième étape opératoire, lesquels éléments
limitent le degré de liberté de mouvement de la transmission (1) dans la direction transversale par rapport à la direction des rails, et/ou sont en applique contre lesdits rails (2),
sachant que lesdits éléments de limitation sont enlevés lors de la troisième étape opératoire.

8. Installation notamment destinée à la mise en œuvre d'un procédé conforme à l'une des revendications précédentes,
laquelle installation est équipée d'un dispositif (4) de régulation thermique,
ledit dispositif comportant un arbre (3) monté à rotation,
lequel arbre (3) est orienté verticalement,
sachant que des disques, sur lesquels sont placés des produits se présentant notamment comme des articles de boulangerie, sont reliés audit arbre (3) avec verrouillage rotatif,
ledit dispositif (4) de régulation thermique étant muni d'éléments chauffants dévolus au chauffage des produits,
ledit arbre (3) étant entraîné de façon telle qu'un chauffage uniforme desdits produits soit obtenu,
l'installation comprenant une base et une transmission (1) pourvue d'un cadre de support (23), **caractérisée par le fait que**
l'installation est nantie de rails (2) déposés et montés sur la base,
le cadre de support (23) reposant sur lesdits rails (2), et pouvant être déplacé,
sachant qu'un ou plusieurs perçage(s) taraudé(s) ininterrompu(s) est (sont) pratiqué(s) dans ledit cadre de support (23) et autorise(nt), respectivement, le vissage d'une pièce vissable (22) pouvant prendre indirectement ou directement appui sur les rails de support (21), notamment en vue de soulever la transmission (1),
sachant que la projection verticale de l'arbre (3), dans le plan défini par les deux rails (2), est englobée par la projection verticale de la transmission (1) dans ledit plan,
- auquel cas la projection verticale dudit arbre (3), dans le plan défini par les deux rails (2), est englobée par la projection verticale de l'arbre de sortie (3) dans ledit plan, ou
- auquel cas la projection verticale dudit arbre (3), dans ledit plan défini par les deux rails (2), englobe la projection verticale de l'arbre de sortie (3) dans ledit plan,
étant précisé que le cadre de support (23) est de réalisation annulaire ou configurée en U,
sachant que la projection verticale du dispositif sur le plan défini par les rails (2), à savoir le plan horizontal, englobe la projection verticale de l'arbre de sortie (3) de la transmission (1) dans ce plan, ou englobe la projection verticale de la transmission (1) dans ce plan, voire est en chevauchement avec ladite projection,
un moteur électrique étant fixé sur ladite base, l'arbre rotorique dudit moteur étant relié à l'arbre d'entrée (3) de la transmission (1), avec verrouillage rotatif, par l'entremise d'un accouplement interposé entre ledit arbre d'entrée (3) et ledit arbre rotorique,
la pièce vissable (22) étant une tige filetée qui prend directement ou indirectement appui sur le rail de support par l'intermédiaire d'un élément d'embase (30).
